(19) Europäisches Patentamt
European Patent Office
Office européen des brevets

(11) **EP 2 483 031 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(21) Anmeldenummer: **10776076.1**

(22) Anmeldetag: **21.09.2010**

(51) Int Cl.:
**B23K 10/00** *(2006.01)*

(86) Internationale Anmeldenummer:
**PCT/DE2010/001119**

(87) Internationale Veröffentlichungsnummer:
**WO 2011/038713 (07.04.2011 Gazette 2011/14)**

(54) **VERFAHREN ZUM PLASMASCHNEIDEN EINES WERKSTÜCKS MITTELS EINER PLASMASCHNEIDANLAGE UND PULSIERENDEM STROM**

METHOD OF PLASMA-CUTTING A WORKPIECE BY MEANS OF A PLASMA-CUTTING SYSTEM AND PULSATING CURRENT

PROCÉDÉ DE DÉCOUPAGE AU PLASMA D'UNE PIÈCE AU MOYEN D'UNE INSTALLATION DE DÉCOUPAGE AU PLASMA ET D'UN COURANT PULSÉ

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **01.10.2009 DE 102009043713**
**25.01.2010 DE 102010005617**

(43) Veröffentlichungstag der Anmeldung:
**08.08.2012 Patentblatt 2012/32**

(73) Patentinhaber: **Kjellberg Finsterwalde Plasma und Maschinen GmbH**
**03238 Finsterwalde (DE)**

(72) Erfinder:
• **FRIEDEL, Jens**
**01968 Brieske (DE)**
• **IRRGANG, Gerhard**
**03238 Finsterwalde (DE)**
• **KRINK, Volker**
**03238 Finsterwalde (DE)**
• **OLLMANN, Jens**
**03238 Finsterwalde (DE)**

(74) Vertreter: **Manasse, Uwe**
**Boehmert & Boehmert**
**Pettenkoferstrasse 20-22**
**80336 München (DE)**

(56) Entgegenhaltungen:
JP-A- 11 347 741       JP-A- 61 262 464
US-A- 4 983 807        US-B1- 6 274 841

• DATABASE WPI Week 198223 Thomson Scientific, London, GB; AN 1982-47562E XP002618039, -& SU 854 651 A1 (I. S. SHAPIRO) 17. August 1981 (1981-08-17)

EP 2 483 031 B1

**Beschreibung**

Die vorliegende Erfindung betrifft ein Verfahren zum Plasmaschneiden eines Werkstücks mittels einer Plasmaschneidanlage gemäß dem Oberbegriff des Anspruchs 1 (siehe, z.B.,

US 6 274 841).

Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht.

Als Plasmagas werden unterschiedliche Gase, zum Beispiel das einatomige Argon und/oder die zweiatomigen Gase Wasserstoff, Stickstoff, Sauerstoff oder Luft eingesetzt. Diese Gase ionisieren und dissoziieren durch die Energie eines Lichtbogens. Der durch eine Düse eingeschnürte Lichtbogen wird dann als Plasmastrahl bezeichnet.

Der Plasmastrahl kann in seinen Parametern durch die Gestaltung der Düse und Elektrode stark beeinflusst werden. Diese Parameter des Plasmastrahls sind zum Beispiel der Strahldurchmesser, die Temperatur, Energiedichte und die Strömungsgeschwindigkeit des Gases.

Beim Plasmaschneiden beispielsweise wird das Plasma durch eine Düse; die gas- oder wassergekühlt sein kann, eingeschnürt. Dadurch können Energiedichten bis $2x10^6$ W/cm$^2$ erreicht werden. Im Plasmastrahl entstehen Temperaturen bis 30.000 °C, die in Verbindung mit der hohen Strömungsgeschwindigkeit des Gases sehr hohe Schneidgeschwindigkeiten an Werkstoffen realisieren.

Plasmaschneidanlagen bestehen in der Regel zumindest aus einer Stromquelle, einem Plasmabrenner und einer Gasversorgung.

Wegen der hohen thermischen Belastung der Düse wird diese in der Regel aus einem metallischen Werkstoff, vorzugsweise wegen seiner hohen elektrischen Leitfähigkeit und Wärmeleitfähigkeit aus Kupfer, hergestellt. Gleiches gilt für den Elektrodenhalter, der aber auch aus Silber hergestellt sein kann. Die Düse wird dann in einem Plasmabrenner, dessen Hauptbestandteile ein Plasmabrennerkopf, eine Düsenkappe, ein Plasmagasführungsteil, eine Düse, eine Düsenhalterung, eine Elektrodenaufnahme, ein Elektrodenhalter mit Emissionseinsatz und bei modernen Plasmabrennern eine Düsenschutzkappenhalterung und eine Düsenschutzkappe sind, eingesetzt. Der Elektrodenhalter fixiert einen spitzen Elektrodeneinsatz aus Wolfram, der für den Einsatz nicht oxidierender Gase als Plasmagas, zum Beispiel ein Argon-Wasserstoff-Gemisch, geeignet ist. Eine sogenannte Flachelektrode, deren Emissionseinsatz beispielsweise aus Zirkonium oder Hafnium, besteht, ist auch für den Einsatz oxidierender Gase als Plasmagas, zum Beispiel Luft oder Sauerstoff, geeignet. Für sauerstoffhaltige Plasmagases kann Zirkonium eingesetzt werden. Wegen seiner besseren thermischen Eigenschaften ist allerdings Hafnium besser geeignet, da dessen Oxid temperaturbeständiger ist.

Um eine hohe Lebensdauer für die Düse und die Elektrode zu erreichen, wird oft mit einer Flüssigkeit, zum Beispiel Wasser, gekühlt, es kann aber auch mit einem Gas gekühlt werden.

Insofern wird in flüssigkeitsgekühlte und gasgekühlte Plasmabrenner unterschieden.

Um eine hohe Lebensdauer der Elektrode zu erreichen, wird der Hochtemperaturwerkstoff als Emissionseinsatz in die Fassung eingebracht, die dann gekühlt wird. Die effektivste Art der Kühlung ist die Flüssigkeitskühlung. Der Lichtbogen brennt zwischen dem Emissionseinsatz der Elektrode und der Düse oder/und dem zu schneidenden Werkstück. Während des Betriebes wird der Emissionseinsatz nach und nach abgetragen und es bohrt sich ein Loch in die Elektrode. Es kommt immer wieder dazu, dass der Lichtbogen auch auf den Elektrodenhalter übergeht und diesen zerstört. Dies geschieht besonders dann, wenn der Emissionseinsatz tiefer als 1 mm zurückgebrannt ist. Damit ist dann die gesamte Elektrode zerstört und muss gewechselt werden.

Bei den zum Plasmaschneiden verwendeten Stromquellen handelt es sich vorwiegend um Gleichstromquellen mit stark fallender Kennlinie oder Konstantstromkennlinie. Dadurch wirken sich verfahrensbedingt verursachte Schwankungen der Schneidspannung nicht oder nur wenig auf den Schneidstrom aus. Diese Schwankungen werden z. B. durch unterschiedliche Brennerabstände zum Werkstück, durch Schwankungen in der Gasversorgung und durch den Verschleiß von Bauteilen des Plasmabrenners verursacht.

Beispiele für Stromquellen mit stark fallender Kennlinie sind Streufeld- oder Streukerntrans-formatoren mit nachgeschaltetem Gleichrichter. Hier wird die fallende Charakteristik durch die Anordnung der Spulen des Transformators erzeugt.

Bei modernen Gleichstromquellen wird die Konstantstromkennlinie durch die Regelung des Schneidstromes mit Hilfe leistungselektronischer Bauelemente, z. B. Thyristoren und Transistoren, realisiert.

Grundsätzlich kann hier in netzgeführte Stromquellen und in Stromquellen mit erhöhter Frequenz unterschieden werden.

Als netzgeführte Stromquellen werden solche bezeichnet, deren Eingriffszeit der Regelung durch die Frequenz der Spannung des Stromversorgungsnetzes und deren Nulldurchgang bestimmt wird. Eine Variante ist ein Transformator mit einem nachgeschaltetem thyristorgesteuerten Gleichrichter. Die minimal mögliche Eingriffszeit der Regelung in den Gleichrichter beträgt je nach Schaltungsvariante zwischen 6,6ms bei einer 3-Puls-Brückenschaltung und 1,6ms bei einer 12-Puls-Brückenschaltung.

Stromquellen mit erhöhter Frequenz verfügen über wesentlich geringere Eingriffszeiten der Regelung, da die Frequenz deutlich höher als die Frequenz der Netzspannung ist. Hier liegen die Eingriffszeiten je nach Frequenz der Stromquelle zwischen 100µs und 5µs.

Eine Variante besteht aus einem Transformator, einem ungeregelten Diodengleichrichter und einem nachgeschalteten Transistorschalter, auch als Chopper bezeichnet, der den Strom regelt. Eine weitere Variante, oft als Inverter bezeichnet, besteht aus einem ungeregeltem Diodengleichrichter, einem Wechselrichter, einem Transformator und Diodengleichrichter. Als Frequenz für den Chopper und den Wechselrichter wird eine Frequenz zwischen 10 und 200 kHz genutzt.

Nach dem Stand der Technik wird ein - abgesehen vom nicht gewollten, aber unvermeidlichen Rauschen bzw. von unerwünschten Oberwellen - möglichst glatter Gleichstrom für eine gute Schnittqualität und eine lange Lebensdauer der Verschleißteile des Plasmabrenners benötigt. Dafür werden meist induktive Bauelemente (Drosseln) in den Stromkreis des Schrieidstromes geschaltet, um die Welligkeit, die durch das Stromnetz und die Schaltvorgänge der Stromquelle verursacht wird, zu reduzieren.

Stromquellen, die mit höherer Frequenz arbeiten, können im Gegensatz zu netzgeführten Stromquellen die durch die Frequenz der Netzspannung verursachte Welligkeit des Gleichstromes ausregeln, da die Frequenz der Stromquelle deutlich höher ist als die Frequenz der Netzspannung. Oft stehen solche Stromquellen nur in begrenzter Leistung, z. B. 10 bis 20kW zur Verfügung. Deshalb werden mehrere Stromquellen parallel geschaltet. Es können auch netzgeführte und Stromquellen mit erhöhter Frequenz parallel geschaltet werden.

Der Erfindung liegt nun die Aufgabe zugrunde, die Lebensdauer der Elektrode zu erhöhen.

Erfindungsgemäß wird diese Aufgabe gelöst durch ein Verfahren zum Plasmaschneiden eines Werkstückes mittels eines Plasmaschneidanlage gemäß Anspruch 1.

Bei dem Verfahren kann vorgesehen sein, dass der pulsierende Schneidstrom Is mit wenigstens einem frei wählbaren Spitzenwert $I_{min}$ und/oder $I_{max}$ im Bereich von 5% bis 70%, vorzugsweise von 10% bis 50%, um seinen arithmetischen Mittelwert $I_m$ schwankt.

Gemäß einer besonderen Ausführungsform des Verfahrens Verfahren kann vorgesehen sein, dass die minimale Abweichung eines Spitzenwertes $I_{max}$ und/oder $I_{min}$ vom arithmetischen Mittelwert Im des Schneidstroms $I_s$ 5A, bevorzugter 10A und am bevorzugsten 20A beträgt.

Außerdem kann vorgesehen sein, dass die maximale Abweichung eines Spitzenwertes $I_{max}$ und/oder $I_{min}$ vom arithmetischen Mittelwert Im des Schneidstroms $I_s$ 200A, vorzugsweise 100A, beträgt.

Günstigerweise beträgt der Betrag der maximalen Stromänderungsgeschwindigkeit dI/dt des Schneidstroms $I_s$ 400A/ms beträgt und/oder der Betrag der minimalen Stromänderungsgeschwindigkeit dI/dt des Schneidstroms Is 2A/ms.

Gemäß einer weiteren besonderen Ausführungsform der Erfindung liegt das Tastverhältnis D = $t_{Imax}$/T des Schneidstroms $I_s$ zwischen 0,1 und 0,9, vorzugsweise zwischen 0,3 und 0,7.

Bei dem Verfahren kann wiederum vorgesehen sein, dass jeder Schneidstrompuls des pulsierenden Schneidstroms $I_s$ eine Niedrigpegeldauer $t_{Imin}$ und eine Hochpegeldauer $t_{Imax}$ aufweist, wobei gilt:

$$t_{Imin} + t_{Imax} = T,$$

mit Periodendauer T = 1/f und $t_{Imin}$ oder $t_{Imax}$ < 25% der Periodendauer T, vorzugsweise $t_{Imin}$ oder $t_{Imax}$ < 15% der Periodendauer T.

Alternativ ist auch denkbar, dass jeder Schneidstrompuls des pulsierenden Schneidstroms Is eine Niedrigpegeldauer $t_{Imin}$ und eine Hochpegeldauer $t_{Imax}$ aufweist, wobei gilt

$$t_{Imin} + t_{Imax} < T,$$

Periodendauer T = 1/f und $t_{Imin}$ + $t_{Imax}$ < 50% der Periodendauer T,

vorzugsweise $t_{Imin}$ + $t_{Imax}$ < 30% der Periodendauer T.

Vorteilhafterweise weist der arithmetische Mittelwert der Schneidspannung einen Wert im Bereich von 90V bis 250V, vorzugsweise im Bereich von 120V bis 220V, auf.

Günstigerweise wird der Volumenstrom des Plasmagases (PG) konstant gehalten.

Insbesondere kann vorgesehen sein, dass die Elektrode eine Flachelektrode ist.

Weiterhin kann vorgesehen sein, dass das Plasmagas zur Rotation in der Plasmakammer gebracht wird.

Vorteilhafterweise wird ein sauerstoffhaltiges Plasmagas verwendet.

Schließlich weist der arithmetische Mittelwert des Schneidstroms $I_s$ günstigerweise einen Wert im Bereich von 25A bis 500A auf.

Der vorliegenden Erfindung liegt anhand von Untersuchungen die Erkenntnis zugrunde, dass auch bei einem glatten Gleichstrom die oben beschriebene Zerstörung des Elektrodenhalters auftritt und somit die Lebensdauer der Elektrode nicht besonders hoch ist. Es wurde aber überraschend festgestellt, dass die Überlagerung des Gleichstrom-Schneidstroms mit einem Wechselstrom bzw. das Pulsieren des Schneidstroms die Lebensdauer positiv beeinflusst.

Besonders beim Plasmaschneiden mit einem sauerstoffhaltigen Plasmagas bei einem Plasmabrenner mit einer sogenannten Flachelektrode, die zumindest aus einem thermisch hoch belastbaren Emissionseinsatz und einem Elektrodenhalter besteht, wurde mehr als eine Verdopplung der Lebensdauer erreicht. Es zeigte sich, dass der Lichtbogenansatzpunkt besser auf dem Emissionseinsatz verbleibt und nicht auf den Elektrodenhalter übergeht. Dadurch kann der Emissionseinsatz weiter "herunter brennen" und der Emissionseinsatz länger und besser ausgenutzt werden. Es wird angenommen, dass der Pulsstrom zu einer besseren Zentrierung des Lichtbogenansatzpunktes auf dem Emissionseinsatz führt.

Die Veränderung des Stromes konnte durch Vorgabe eines entsprechenden Sollwertes und durch entsprechende Auslegung der Stromquelle realisiert werden.

Folgende beispielhafte Werte sollen dies erläutern:

Das Plasmaschneiden von 15mm Baustahl kann beispielsweise mit folgenden Parametern erfolgen:

| | |
|---|---|
| Plasmagas: | Sauerstoff |
| Plasmagasdruck | 9 bar |
| Plasmagasvolumenstrom | 1.500 l/h |
| Sekundärgas | Stickstoff |
| Sekundärgasdruck | 6 bar |
| Sekundärgasvolumenstrom | 2.200 l/h |
| Schneidgeschwindigkeit. | 2,7 m/min |
| Schneidspannungsmittelwert: | 135V |
| Schneidstrommittelwert: | 160A |
| Min. Schneidstrom $I_{min}$ | 140A |
| Max. Schneidstrom $I_{max}$ | 180A |
| Frequenz | 83Hz |
| Durchmesser der Düsenbohrung | 1,4mm |

Vorzugsweise sollten die Werte hinsichtlich der Frequenz und der Amplituden $I_{max}$ (maximaler Schneidstrom) $I_{min}$ (minimaler Schneidstrom) so gewählt werden, dass sich die Stromwelligkeit nicht auf der Schnittfläche in Form von Riefen abbildet. Die Lebensdauer der Elektrode konnte so von 3 Stunden auf 8 Stunden erhöht werden.

Auch bei Strömen von 360A konnte die Lebensdauer von 2 Stunden auf 6 Stunden erhöht werden.

Weitere Merkmale und Vorteile der Erfindung ergeben sich aus der nachfolgenden Beschreibung, in der mehrere Ausführungsbeispiele der vorliegenden Erfindung unter Bezugnahme auf die Figuren beschrieben sind, in denen:

Figur 1        ein Schemadiagramm von einer Plasmaschneidanlage nach dem Stand der Technik zeigt;

Figur 2        den Ablauf eines Plasmaschneidverfahrens gemäß dem Stand der Technik schematisch zeigt;

Figur 3        den Ablauf eines Plasmaschneidverfahrens gemäß einer besonderen Ausführungsform der vorliegenden Erfindung schematisch zeigt;

Figuren 4 bis 9        besondere Ausführungsformen des Plasmabschneidverfahrens gemäß einen ersten Aspekt der vorliegenden Erfindung zeigen;

Figuren 10 bis 18        besondere Ausführungsformen des Plasmabschneidverfahrens gemäß einen zweiten Aspekt der vorliegenden Erfindung zeigen;

Figur 19        eine Schnittansicht eines Plasmabrenners mit Flachelektrode zeigt; und

Figur 19a    den Plasmabrenner von Figur 19 zusätzlich mit Rotation von Plasmagas und Sekundärgas zeigt.

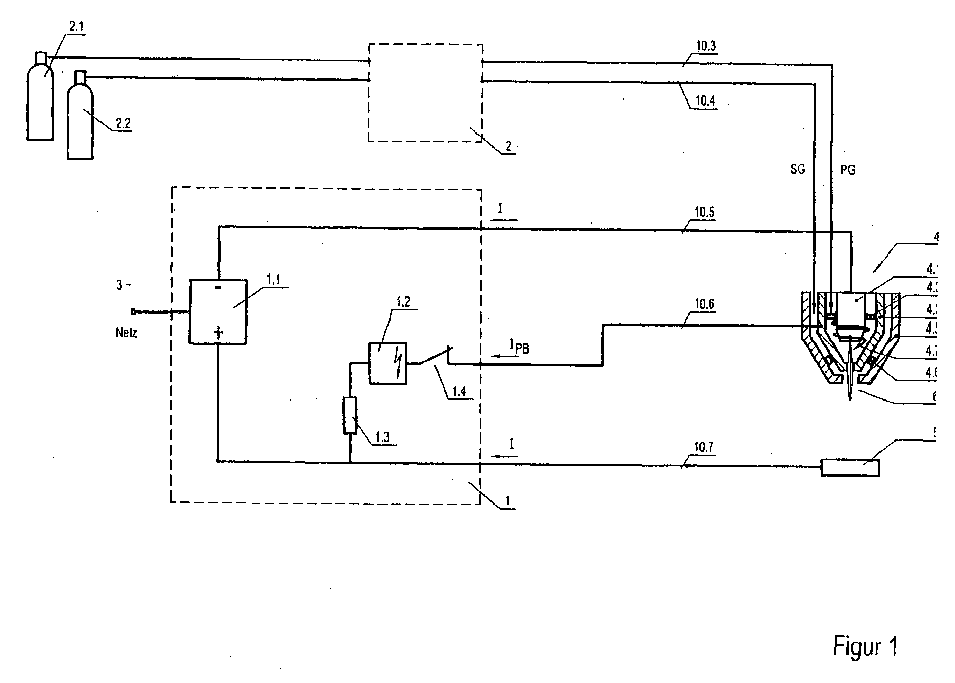

Fig. 1 zeigt ein Schemadiagramm einer Plasmaschneidanlage nach dem Stand der Technik, die aus der Plasmastromquelle 1, deren Bestandteile die Stromquelle 1.1, das Zündgerät 1.2, der Widerstand 1.3 und der Kontakt 1.4 sind. Der Minuspol der Stromquelle ist mit der Leitung 10.5 mit der Elektrode 4.1 des Plasmabrenners 4 und der Pluspol mit der Leitung 10.7 mit dem Werkstück 5 und über den Widerstand 1.3, das Zündgerät 1.2 sowie den Kontakt 1.4 über die Leitung 10.6 mit der Düse 4.2 des Plasmabrenners 4 verbunden. Die Plasmastromquelle wird in der Regel von einem dreiphasigen Drehstromnetz, z.B. 400V/50Hz mit elektrischer Energie versorgt. Die Gasversorgung des Plasmabrenners erfolgt hier über die Gaskonsole 2, in der sich Ventile, z. B. Magnetventile und/oder Regelventile (nicht dargestellt) zum Schalten der Gase, insbesondere des Plasmagases PG und des Sekundärgases SG befinden können. Die Gasversorgung erfolgt in diesem Beispiel durch Gasflaschen 2.1 für das Plasmagas und 2.2 für das Sekundärgas. Beim Schneiden von un- und niedriglegierten Stählen wird oft Sauerstoff als Plasmagas eingesetzt, es kann aber auch ein sauerstoffhaltiges Gas, z. B. Luft oder Gasgemisch, z. B. Stickstoff/Sauerstoff verwendet werden. Als Sekundärgas kann im gleichen Fall ebenfalls Sauerstoff, aber auch ein sauerstoffhaltiges Gas, z. B. Luft oder Gasgemisch, z. B. Stickstoff/Sauerstoff oder Stickstoff verwendet werden. Das Plasmagas PG wird über die Gasleitung 10.3 in den Raum zwischen Elektrode 4.1 und Düse 4.2, die Plasmakammer, und das Sekundärgas SG wird über die Gasleitung 10.4 in den Raum zwischen Düse 4.2 oder Düsenkappe 4.4 (nicht dargestellt) und Düsenschutzkappe 4.5 geführt.

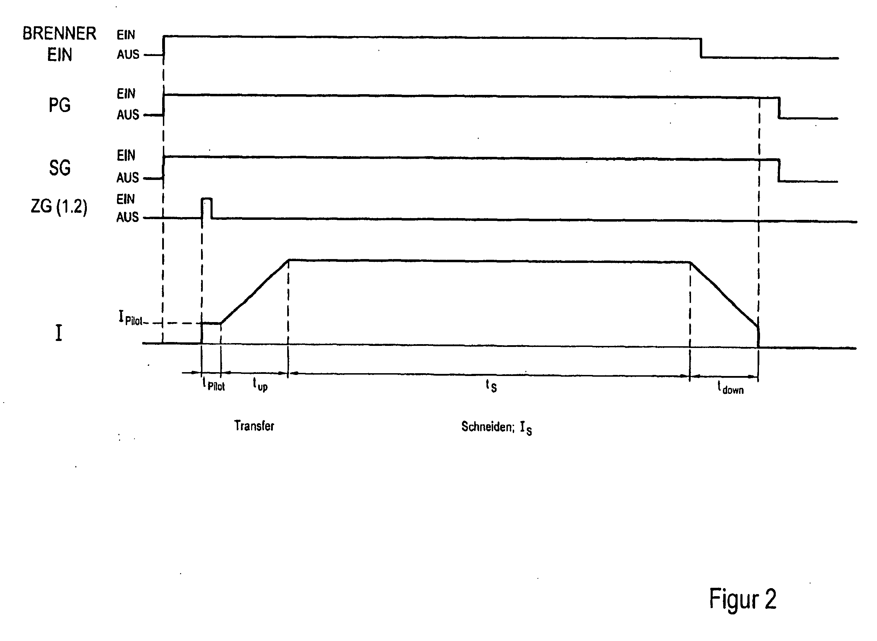

Gemeinsam mit Fig. 2 wird nachfolgend der Ablauf beim Plasmaschneiden nach dem Stand der Technik beschrieben. Zunächst wird der Plasmabrenner 4 mit Hilfe eines Führungssystems, beispielsweise einer CNC-gesteuerten xy-Koordinatenführungsmaschine oder einem Roboter in einem definierten Abstand zum Werkstück 5 positioniert. Das vom Führungssystem an die Plasmastromquelle gesendete Signal "Brenner EIN" startet den Prozess. Danach strömen von der Gaskonsole gesteuerte Plasmagas PG und Sekundärgas SG durch den Plasmabrenner 4. Nach einer bestimmten Zeit, bspw. 400 ms zündet das Zündgerät 1.2 mit Hochspannung den Pilotlichtbogen, der zwischen der Elektrode 4.1 und der Düse 4.2 brennt und die Strecke zwischen dem Plasmabrenner 4 und dem Werkstück 5 ionisiert. Der Pilotstrom $I_{Pilot}$ wird durch den Widerstand 1.3 begrenzt. Typische Werte für den Pilotstrom sind 12 bis 35A. Der Widerstand 1.3 erzeugt gleichzeitig einen Spannungsabfall zwischen der Düse 4.2 und dem Werkstück 5, was das Übersetzen des anodischen Ansatzpunktes von der Düse zum Werkstück unterstützt. Nach dem Übersetzen des Stromes I wird der Kontakt 1.4 geöffnet, der Strom I wird während der Zeit $t_{up}$ (Bereich von 50 ms bis 500 ms) auf den benötigten Schneidwert erhöht, es bildet sich der Schneidstrom $I_s$ aus, der während der Zeit $t_s$ fließt. Die Werte für den Schneidstrom $I_s$ liegen je nach zu schneidender Blechdicke, die üblicherweise zwischen 1 und 200mm betragen kann, zwischen 20 und 1.000A. Nach dem Stand der Technik soll der während dieser Zeit fließende Strom möglichst glatt sein. Der Strom I fließt bis zum Ausschalten des Signals "Brenner EIN", danach wird der Strom I während der Zeit $t_{down}$ verringert und abgeschaltet. Übliche Werte für diese Zeit sind 50 bis 500ms, es kann aber auch ohne diese Zeit der Strom sofort abgeschaltet werden. Plasmagas und Sekundärgas strömen noch nach, um den Plasmabrenner weiter zu kühlen. Stand der Technik ist ebenfalls, mit unterschiedlichen Plasma- und Sekundärgases sowie unterschiedliche Drücken und Gasmengen in den Prozessphasen zu arbeiten.

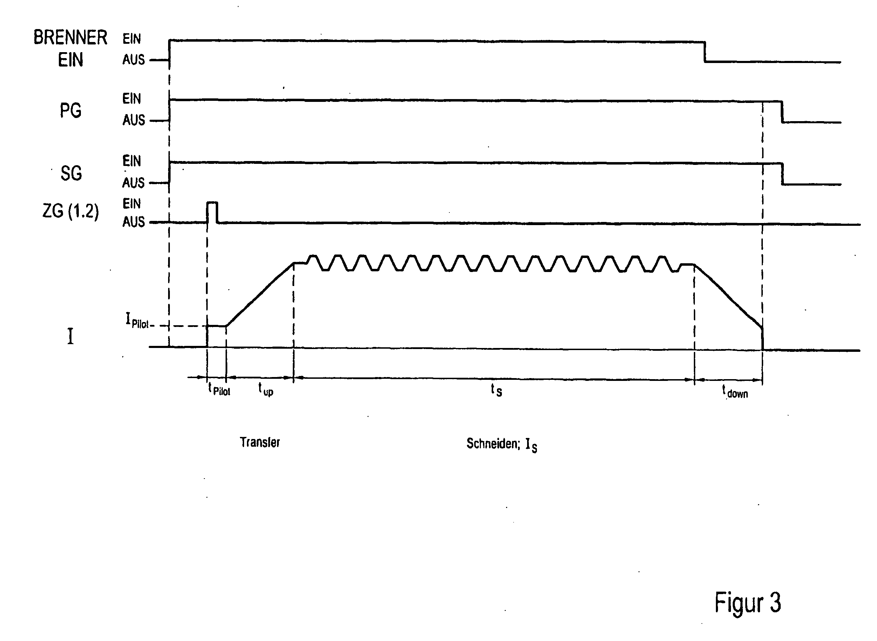

Fig. 3 zeigt im Gegensatz zum Stand der Technik einen, lediglich beispielhaft dargestellten definiert schwankenden Schneidstrom $I_s$ während der Zeit $t_s$ gemäß einer besonderen Ausführungsform der Erfindung. Zur Durchführung des Plasmaschneidverfahrens gemäß einer besonderen Ausführungsform der Erfindung kann auch die Plasmaschneidanlage von Figur 1 verwendet werden.

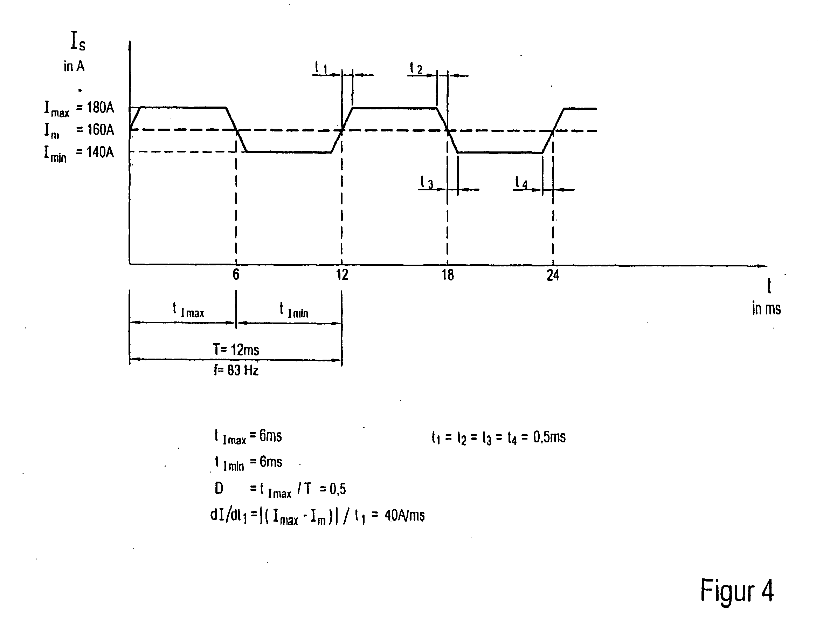

Die Figuren 4 bis 9 zeigen Ausführungsbeispiele für Schneidstromverläufe gemäß der vorliegenden Erfindung, wobei Fig. 4 den in Figur 3 angedeuteten Schneidstromverlauf betrifft.

Figur 4 zeigt einen Ausschnitt des während der Zeit $t_s$ fließenden Stromes $I_s$. Der arithmetische Mittelwert $I_m$ des Stromes beträgt hier 160A, der maximale Strom $I_{max}$ beträgt 180A und der minimale Strom $I_{min}$ beträgt 140A. Die Abweichung der Werte $I_{max}$ und $I_{min}$ vom arithmetischen Mittelwert Im ist hier gleich groß und beträgt 20A und damit 12,5%. Der dem Gleichstrom überlagerte Wechselstrom ist trapezförmig ausgebildet.

Die Stromänderungsgeschwindigkeiten dI/dt, d. h. die Beträge der Stromänderungen in einer Zeit, die benötigt wird, um :

- vom arithmetischen Mittelwert $I_m$ zum maximalen Schneidstrom $I_{max}$

$$dI/dt_1 = |(I_{max}-I_m)|/t_1$$

- vom maximalen Schneidstrom $I_{max}$ zum arithmetischen Mittelwert $I_m$

$$dI/dt_2 = |(I_{max}-I_m)|/t_2$$

- vom arithmetischen Mittelwert Im zum minimalen Schneidstrom $I_{min}$

$$dI/dt_3 = |(I_{max}-I_m)|/t_3$$

- vom minimalen Schneidstrom $I_{min}$ zum arithmetischen Mittelwert Im

$$dI/dt_4 = |(I_{max}-I_m)|/t_4$$

zu gelangen, sind hier konstant, da die Beträge der Differenzen zwischen dem maximalen Schneidstrom und dem arithmetischen Mittelwert des Schneidstromes und dem minimalen Schneidstrom und dem arithmetischen Mittelwert des Schneidstromes jeweils 20A und die jeweiligen Zeiten t1, t2, t3, t4 gleich groß sind und jeweils 0,5 ms betragen. Sie beträgt 40 A/ms.

$$dI/dt_1 = (I_{max} - I_m) / t_1 = (180A - 160A) / 0,5\ ms = 40\ A/ms$$

Die Periodendauer T beträgt 12 ms und die Frequenz f damit 83 Hz. Mit diesem Stromverlauf wurde mehr als eine Verdopplung der Lebensdauer erreicht (siehe obiges Beispiel des Plasmaschneidens von 15 mm Baustahl).

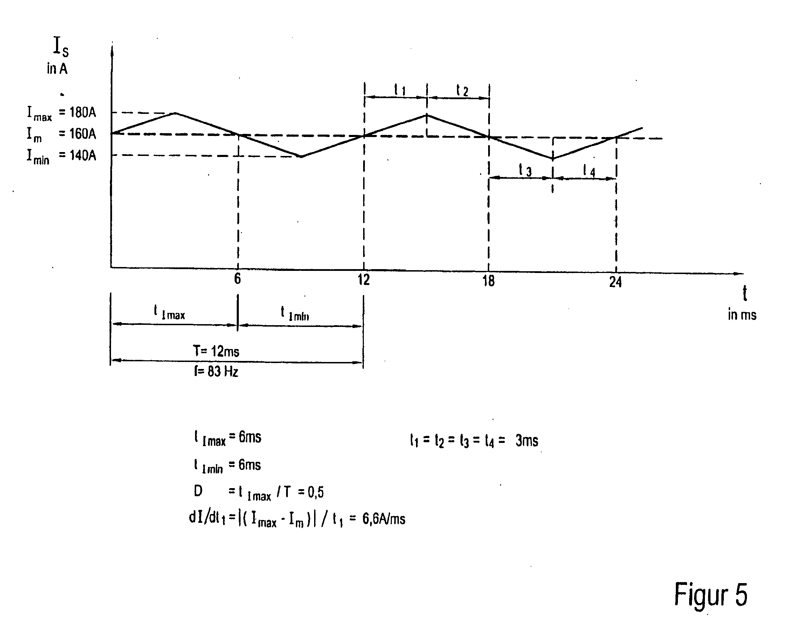

Figur 5 zeigt einen dreieckförmigen Stromverlauf, wobei Periodendauer, Frequenz, minimaler und maximaler Schneidstrom sowie der arithmetische Mittelwert des Schneidstromes mit Figur 4 identisch sind. Die Stromänderungsgeschwindigkeiten sind mit 6,6 A/ms geringer und gleich groß.

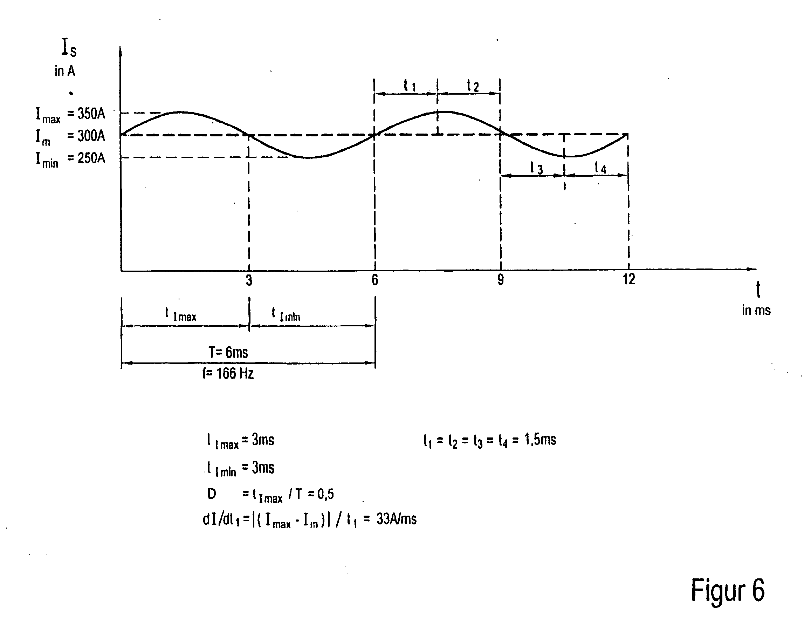

Figur 6 zeigt einen sinusförmigen Stromverlauf mit einer Periodendauer von 6 ms und einer Frequenz von 166 Hz. Der arithmetische Mittelwert Im des Stromes beträgt hier 300A, der maximale Strom $I_{max}$ beträgt 350A und der minimale Strom $I_{min}$ beträgt 250A. Die Abweichung der Werte $I_{max}$ und $I_{min}$ vom arithmetischen Mittelwert $I_m$ ist gleich groß und beträgt 50A und damit 16%. Die Stromänderungsgeschwindigkeiten betragen 33 A/ms und sind gleich groß.

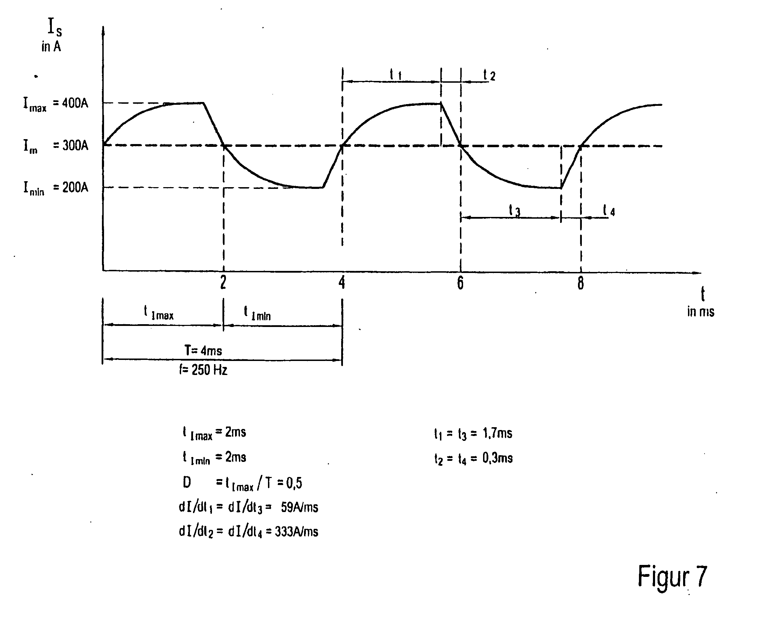

Figur 7 zeigt einen Stromverlauf, der einer e-Funktion ähnlich ist. Die Periodendauer beträgt 4 ms und die Frequenz 250 Hz. Der arithmetische Mittelwert Im des Stromes beträgt hier 300A, der maximale Strom $I_{max}$ beträgt 400A und der minimale Strom $I_{min}$ beträgt 200A. Die Abweichung der Werte $I_{max}$ und $I_{min}$ vom arithmetischen Mittelwert Im ist gleich groß und beträgt 100A und damit 33%. Die Stromänderungsgeschwindigkeiten sind in diesem Beispiel unterschiedlich und haben folgende Werte:

$$dI/dt_1 = dI/dt_3 = 100\ A / 1,7\ ms = 59\ A/ms$$

$$dI/dt_2 = dI/dt_4 = 100\ A / 0,3\ ms = 333\ A/ms$$

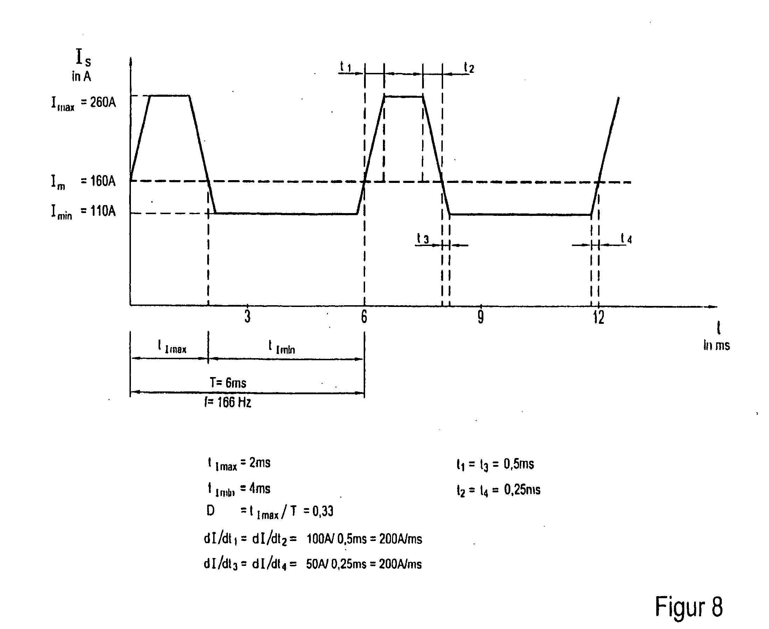

Figur 8 zeigt einen trapezförmigen Stromverlauf, wobei diesmal die Differenzen zwischen dem maximalen Schneidstrom $I_{max}$ und dem arithmetischen Mittelwert $I_m$ des Schneidstroms $I_s$ sowie zwischen dem minimalen Schneidstrom $I_{min}$ und dem arithmetischen Mittelwert Im des Schneidstroms $I_s$ und die Zeiten $t_{Imax}$ (2ms) und $t_{Imin}$ (4ms) unterschiedlich groß sind:

$$| Imax - Im | = | 260\ A - 160\ A | = 100A$$

$$| Imin - Im | = | 110\ A - 160\ A| = 50\ A$$

Die Periodendauer T beträgt 6 ms und die Frequenz 166 Hz. Die Stromänderungsgeschwindigkeiten sind in diesem Beispiel gleich groß und betragen 200 A/ms.

$$dI/dt_1 = dI/dt_2 = 100\ A\ /\ 0{,}5\ ms = 200\ A/ms$$

$$dI/dt_3 = dI/dt_4 = 50\ A\ /\ 0{,}25\ ms = 200\ A/ms$$

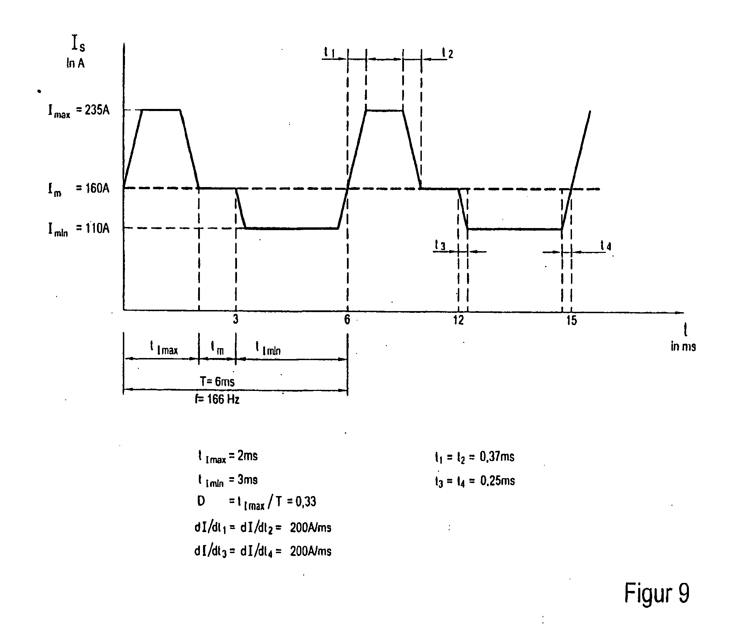

Figur 9 zeigt ebenfalls einen trapezförmigen Stromverlauf, wobei die Differenzen zwischen dem maximalen Schneidstrom $I_{max}$ und dem arithmetischen Mittelwert $I_m$ des Schneidstroms Is sowie zwischen dem minimalen Schneidstrom $I_{min}$ und dem arithmetischen Mittelwert $I_m$ des Schneidstroms $I_s$ und die Zeiten $t_{Imax}$ (2ms) und $t_{Imin}$ (3ms) unterschiedlich groß sind und der Schneidstrom eine Zeit auf seinem arithmetischen Mittelwert Im ist:

$$|\ Imax - Im\ | = |\ 235\ A - 160\ A\ | = 75A$$

$$|\ Imin - Im\ | = |\ 110\ A - 160\ A| = 50\ A$$

Die Periodendauer T beträgt 6 ms und die Frequenz 166 Hz. Die Stromänderungsgeschwindigkeiten sind in diesem Beispiel gleich groß und betragen ca. 200 A/ms.

$$dI/dt_1 = dI/dt_2 = 100\ A\ /\ 0{,}37\ ms = 200\ A/ms$$

$$dI/dt_3 = dI/dt_4 = 50\ A\ /\ 0{,}25\ ms = 200\ A/ms$$

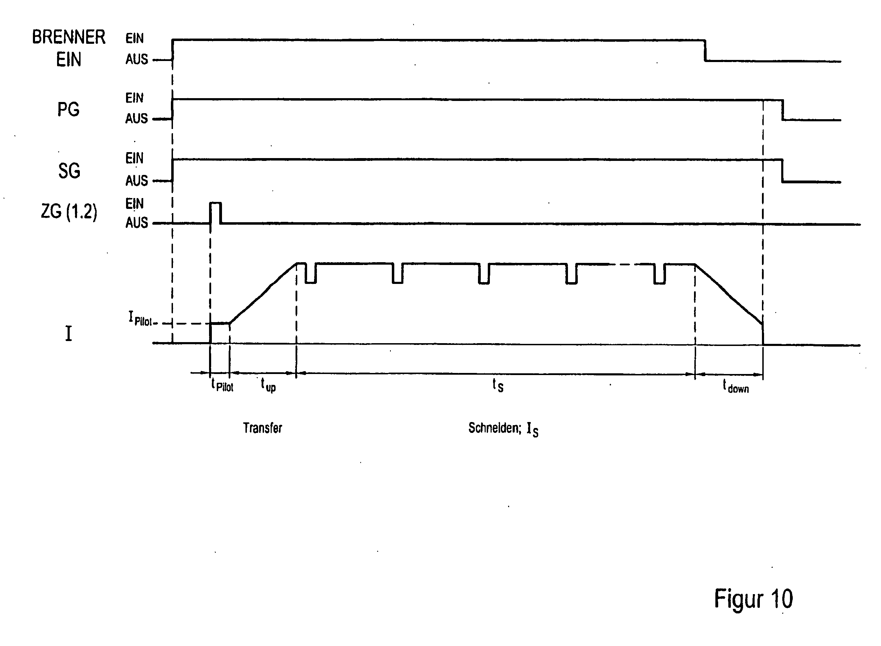

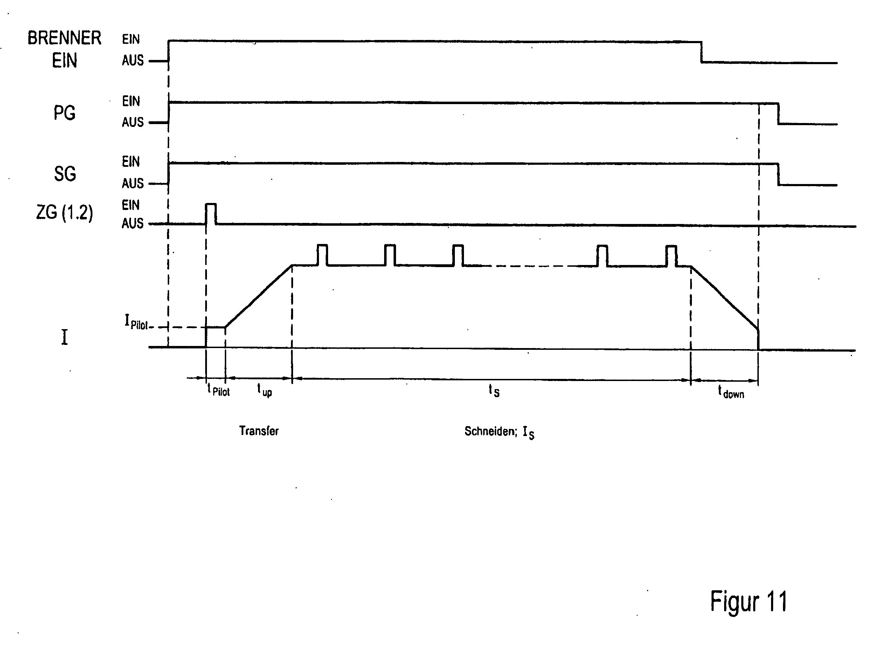

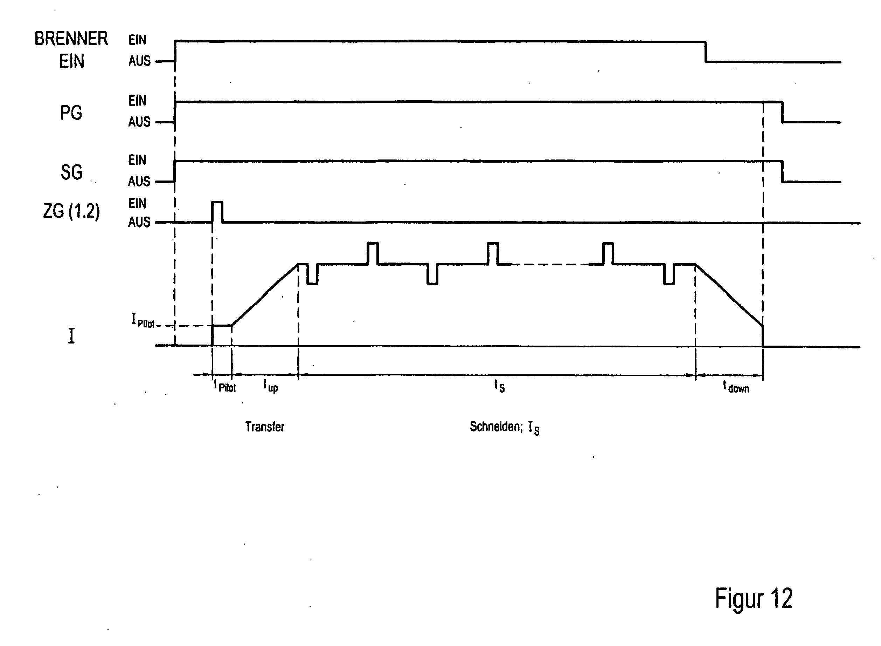

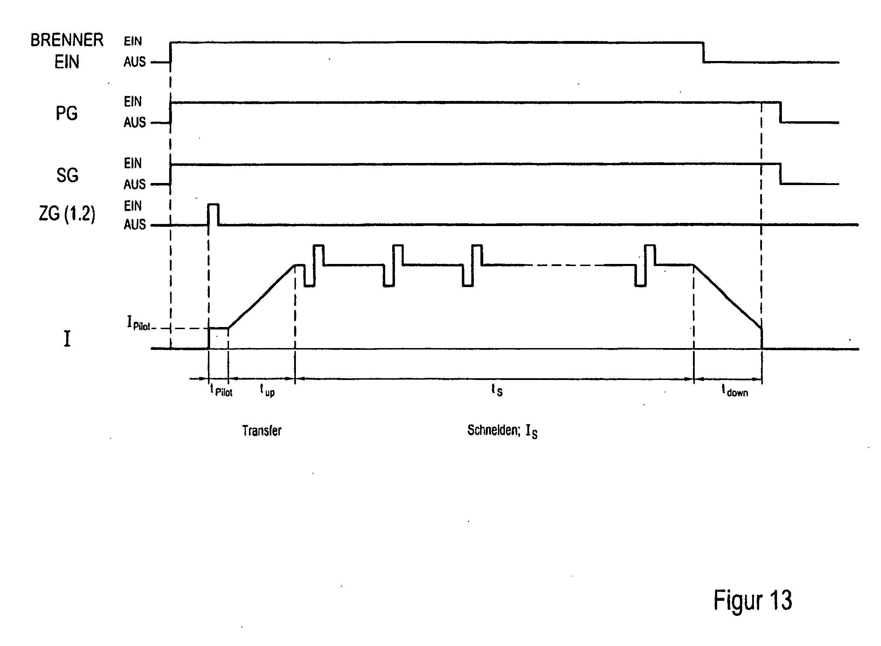

Die Figuren 10 bis 13 zeigen besondere Ausführungsformen des Plasmaschneidverfahrens gemäß dem zweiten Aspekt der vorliegenden Erfindung. Statt einer Überlagerung eines Gleichstroms mit einem Wechselstrom lässt sich in diesen Fällen der Schneidstrom als sich periodisch wiederholende Pulsfolge beschreiben. In den Figuren 10 und 11 beinhaltet die Signalform mit der Periodendauer (T (= 1/f) einen Rechteckimpuls nach unten (Figur 10) bzw. einen Rechteckimpuls nach oben (Figur 11), ausgehend von einem Basiswert. In den Figuren 12 und 13 umfasst die Signalform dagegen sowohl einen Rechteckimpuls nach oben als auch nach unten, wobei sich die Signalformen in den Figuren 12 und 13 lediglich in dem zeitlichen Abstand zwischen den Rechteckimpulsen nach oben und nach unten unterscheiden.

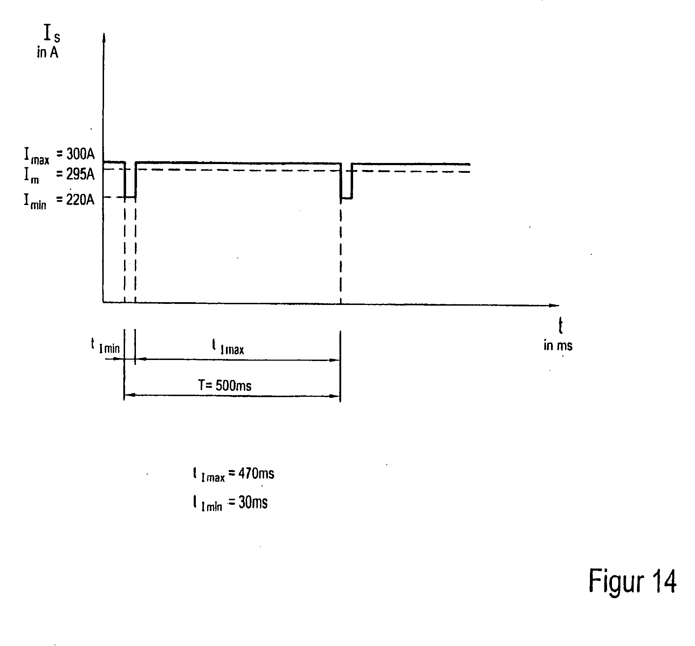

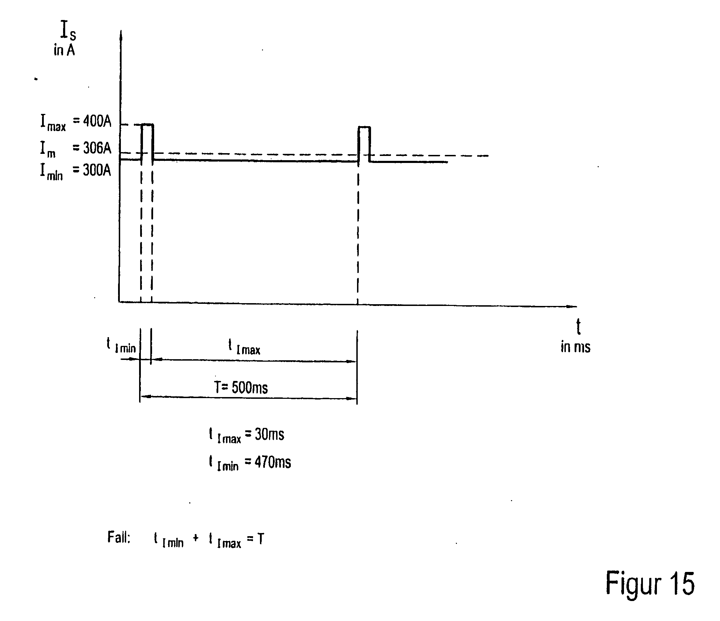

In der Figur 14 ist ein konkretes Zahlenbeispiel für die Ausführungsform gemäß Figur 10 dargestellt, während in der Figur 15 ein konkretes Ausführungsbeispiel für die Ausführungsform gemäß Figur 11 dargestellt ist. In beiden Fällen gilt für die Summe von $t_{Imax}$, das heißt die Hochpegeldauer, und von $t_{Imin}$, das heißt die Niedrigpegeldauer, und die Periode T:

$$t_{Imin} + t_{Imax} = T,$$

wobei T 500 ms, $t_{Imax}$ 470 ms und $t_{Imin}$ 30 ms betragen. Für $I_{max}$ (Hochpegel) = 300 A und $I_{min}$ (Niedrigpegel) = 220A ergibt sich ein arithmetischer Mittelwert $I_m$ des Schneidstroms in Höhe von 295A.

In dem in Figur 15 gezeigten Fall beträgt die Periodendauer T (= 1/f) ebenfalls 500ms, aber betragen $t_{Iax}$ 30ms und $t_{Imin}$ 470 ms. Mit $I_{max}$ = 400A und $I_{min}$ = 300A ergibt sich ein arithmetischer Mittelwert $I_m$ des Schneidstroms $I_s$ von 306A.

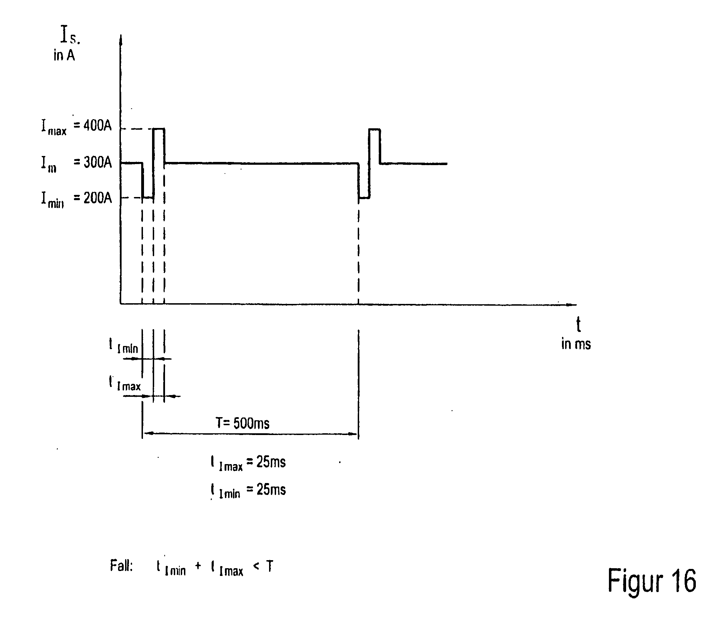

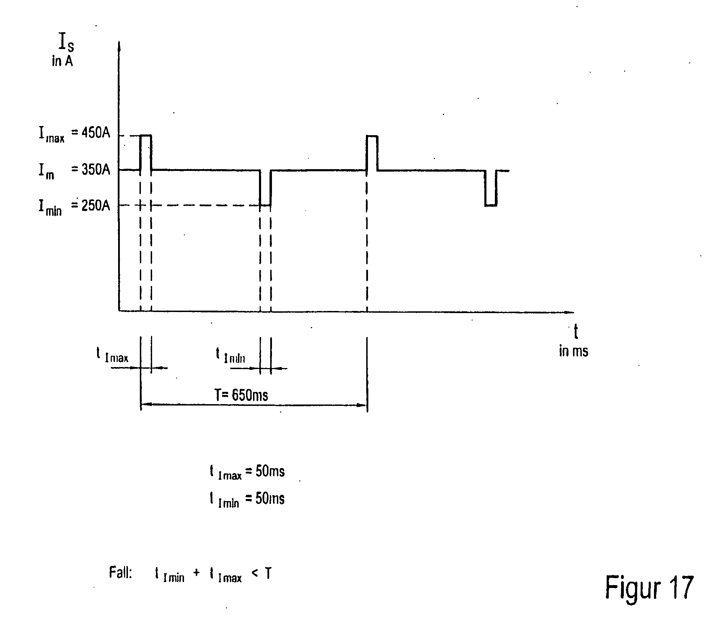

Die Figuren 16 und 17 zeigen Fälle, in denen für die Pulse des Schneidstroms $I_s$ gilt:

$$t_{Imin} + t_{Imax} < T.$$

Figur 16 stellt ein Zahlenbeispiel für die Ausführungsform gemäß Figur 13 dar, während Figur 17 ein Zahlenbeispiel für die Ausführungsform gemäß Figur 14 darstellt. In Figur 16 beträgt die Periodendauer T 500 ms, während sowohl $t_{Imax}$ als auch $t_{Imin}$ deutlich kleiner sind, nämlich jeweils 25ms betragen. Für $I_{max}$ = 400 A und $I_{min}$ = 200A ergibt sich damit ein arithmetischer Mittelwert $I_m$ des Schneidstroms Is von 300A.

In Figur 17 beträgt die Periodendauer T 650ms und sind $t_{Imax}$ sowie $t_{Imin}$ deutlich geringer, nämlich jeweils 50ms. Bei einem maximalen Strom $I_{max}$ von 450A und einem minimalen Strom von $I_{min}$ von 250 A ergibt sich damit ein arithmetischer Mittelwert $I_m$ von 350A.

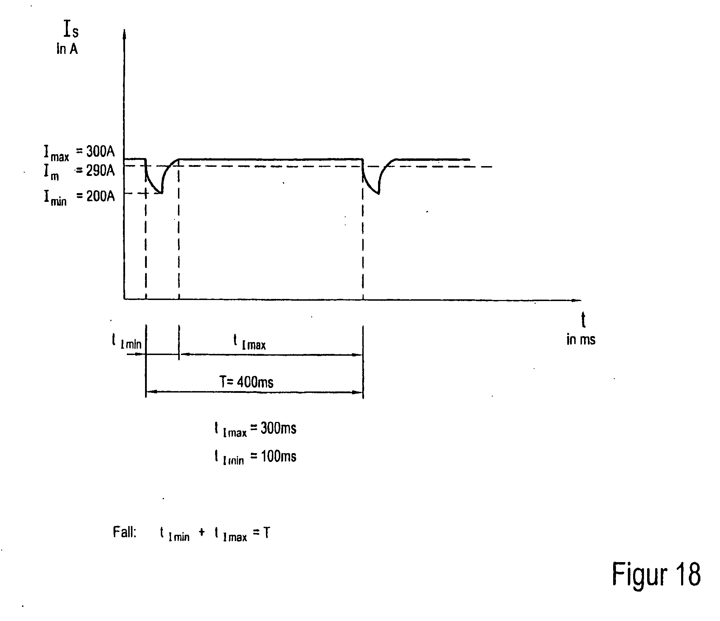

Bei dem in Figur 18 gezeigten Signalverlauf des Schneidstroms $I_s$ handelt es sich wiederum um eine Pulsfolge mit einer Periodendauer T (= 400ms) = $t_{Imin}$ + $t_{Imax}$, wobei $t_{Imax}$ 300ms beträgt und $t_{Imin}$ 100ms beträgt. Die periodische Signalform weist jedoch keinen Rechteckimpuls, sondern einen zahn- oder widerhakenähnlichen Verlauf auf. $t_{Imin}$ entspricht der Zeit, während derer der Schneidsstrom $I_s$ von $I_{max}$ (= 300A) abweicht. Bei einem minimalen Strom von $I_{min}$ von 200A ergibt sich damit ein arithmetischer Mittelwert Im des Schneidstroms Is von 290A.

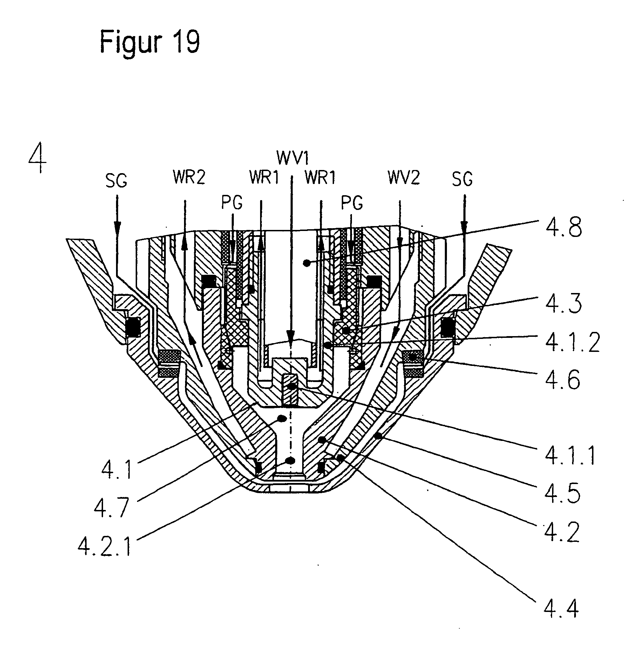

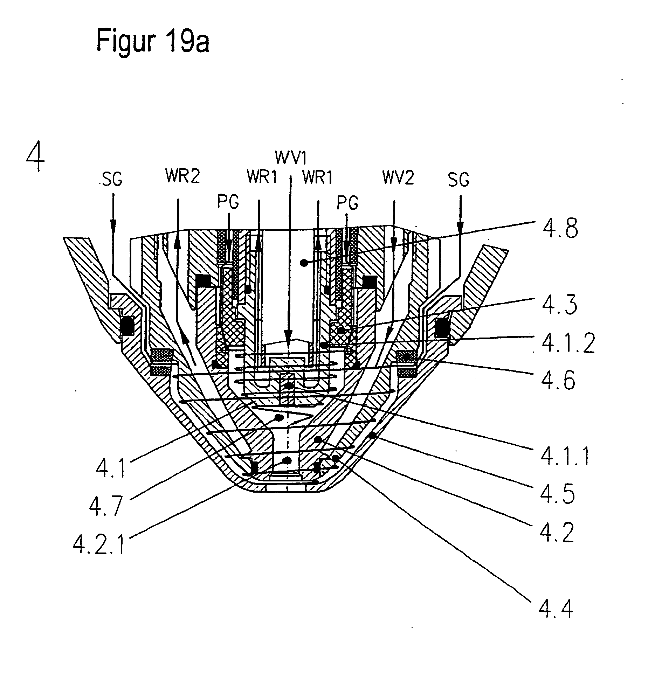

Schließlich zeigt Figur 19 einen Schnitt durch eine Seitenansicht eines Plasmabrenners 4 mit einer Flachelektrode 4.2, bei der das erfindungsgemäße Verfahren besonders vorteilhaft eingesetzt werden kann.

Die wesentlichen dargestellten Bestandteile des Plasmabrenners 4 (von dem nur ein Plasmabrennerkopf dargestellt ist) sind eine Elektrode 4.1 in Form einer Flachelektrode, die einen Elektrodenhalter 4.1.1 und einen Emissionseinsatz 4.1.2 umfasst, eine Düse 4.2 mit einer Düsenbohrung 4.2.1, wobei die Düse 4.2 und die Elektrode 4.1 zwischen sich eine Plasmakammer 4.7 bilden. Ein Plasmagas PG wird über eine Plasmagasführung 4.3, die das Plasmagas durch geeignet angeordnete Bohrungen in Rotation versetzt, in die Plasmakammer 4.7 geführt, wo es durch einen Plasmalichtbogen ionisiert und ein Plasmastrahl 6 (nicht dargestellt, siehe aber Figur 1) ausgebildet wird. Die Düse 4.2 wird durch eine Düsenkappe 4.4 fixiert. In dem von beiden eingeschlossenen Raum strömt ein Kühlmittel von einem Kühlmittelvorlauf  WV2 zu einem Kühlmittelrücklauf WR2 und kühlt die Düse 4.2 und die Düsenkappe 4.4. Die innen hohl ausgebildete Elektrode 4.1, in die ein Kühlrohr 4.8 hineinragt, wird ebenfalls durch ein Kühlmittel gekühlt. Dieses strömt von einem Kühlmittelvorlauf WV1 durch das Kühlrohr 4.8 in den Hohlraum der Elektrode 4.1 zur Elektrodenspitze hin und dann zwischen dem Kühlrohr 4.8 und der Elektrode 4.1 zu einem Kühlmittelrücklauf WR1 zurück. Als Kühlmittel wird hier destilliertes Wasser, das mit Frostschutzzusatz versehen sein kann, verwendet. Vorteilhaft ist eine Wasserumlaufkühlung (nicht dargestellt), die das Kühlmittel mittels eines Wärmetauschers (nicht gezeigt) oder einer Kältemaschine (nicht gezeigt) kühlt und über eine Pumpe (nicht gezeigt) wieder dem Plasmabrenner zuführt. Dabei können Volumenstrom und Temperatur des Kühlmittels überwacht und/oder gesteuert werden.

Das Sekundärgas SG strömt in einen Raum zwischen der Düsenkappe 4.4 und einer Düsenschutzkappe 4.5 und wird durch eine Sekundärgasführung 4.6 durch geeignete Bohrungen in Rotation versetzt und dann dem Plasmastrahl 6 zugeführt. Das Sekundärgas SG schützt in Kombination mit der Düsenschutzkappe 4.5 insbesondere die Düse 4.2 und die Düsenkappe 4.4 beim Einstechen in ein Werkstück 5 (siehe Figur 1) vor Beschädigung durch hochspritzendes Material.

Die Figur 19a zeigt zusätzlich schematisch die durch eine jeweilige Gasführung erzeugte Rotation des Plasmagases PG und des Sekundärgases SG.

Die Erfindung definiert, dass der Strom I erst mindestens 1 sec. nach Erreichen des zum Schneiden vorgegebenen arithmetischen Mittelwerts um diesen schwankt.

Weitere Aspekte können sein:

-    dass der Strom I periodisch, d. h. mit konstanter Frequenz f schwankt;

-    dass die Frequenz von der Schneidspannung unabhängig ist und/oder konstant gehalten wird;

-    dass die mittlere Stromdichte der Fläche der Düsenbohrung 4.2.1 zwischen 30 und 150 A/mm² liegt;

-    dass die mittlere Stromdichte der Fläche der Düsenbohrung 4.2.1 zwischen 60 und 150 A/mm² liegt;

-    dass das Plasmagas PG durch eine Gasführung im Raum zwischen der Elektrode 4.1 und der Düse 4.2 in Rotation versetzt wird

-    dass der Volumenstrom des Plasmagases PG im Bereich von 700 l/h bis 7.000 l/h liegt

-    dass der Druck des Plasmagases PG im Raum zwischen der Elektrode 4.1 und der Düse 4.2 zwischen 2,5 und 8 bar liegt

-    dass das Plasmagas PG Sauerstoff, ein sauerstoffhaltiges Gas oder Gasgemisch ist

-    dass das Plasmagas PG zumindest aus einem molekularen Gas, wie Sauerstoff, Stickstoff, Wasserstoff, besteht

- dass das Plasmagas PG zumindest zu 30 Vol. % aus einem molekularen Gas, wie Sauerstoff, Stickstoff, Wasserstoff, besteht

- dass sie über eine Wasserkühlung für den Plasmabrenner 4 verfügt.

- dass sie über eine Datenbank verfügt, in der als Schneidparameter zumindest Material, Schneidstrom, Schneidgeschwindigkeit und Plasmagas definiert sind.

- Elektrode 4.1 für einen Plasmabrenner 4, dass der Elektrodenhalter 4.1.1 innen hohl ist und eine Innenfläche bildet

- dass die Elektrode 4.1 als Flachelektrode ausgebildet ist

- dass die Elektrode 4.1 wassergekühlt ist

- dass der Emissionseinsatz 4.1.2 einen Durchmesser von 0,9 bis 8 mm hat

- dass die Düsenbohrung 4.2.1 einen Durchmesser von 0,4 bis 7 mm hat,

- dass die Düse 4.2 wassergekühlt ist.

- dass im Raum zwischen der Elektrode 4.1 und Düse 4.2 eine Gasführungsteil vorhanden ist

- dass eine Düsenschutzkappe 4.5 vorhanden ist

- dass zwischen der Düsenschutzkappe 4.5 und der Düsenkappe 4.4 oder Düse 4.2 ein Gasführungsring vorhanden ist

- dass der Gasführungsring das Sekundärgas SG in Rotation versetzt

Bezugszeichenliste

| | |
|---|---|
| 1 | Plasmaschneidstromquelle |
| 1.1 | Stromquelle |
| 1.2 | Zündgerät ZG |
| 1.3 | Widerstand |
| 1.4 | Schaltkontakt |
| 2 | Gaskonsole |
| 2.1 | Gasflasche mit Plasmagas |
| 2.2 | Gasflasche mit Sekundärgas |
| 4. | Plasmabrenner |
| 4.1 | Elektrode |
| 4.1.1 | Emissionseinsatz |
| 4.1.2 | Elektrodenhalter |
| 4.2 | Düse |
| 4.2.1 | Düsenbohrung |
| 4.3 | Plasmagasführung |
| 4.4 | Düsenkappe |
| 4.5 | Düsenschutzkappe |
| 4.6 | Sekundärgasführung |
| 4.7 | Plasmakammer |
| 4.8 | Kühlrohr |
| 5. | Werkstück |
| 6. | Plasmastrahl |
| 10.1 | Kühlmittelvorlaufleitung |
| 10.2 | Kühlmittelrücklaufleitung |
| 10.3 | Plasmagasleitung |
| 10.4 | Sekundärgasleitung |

10.5 Stromleitung zur Elektrode
10.6 Stromleitung zur Düse
10.7 Stromleitung zum Werkstück

D Tastverhältnis $D=t_{Imax}/T$
f Frequenz
dI/dt Stromänderungsgeschwindigkeit
I Strom
$I_m$ arithmetischer Mittelwert des Schneidstroms
$I_s$ Schneidstrom
$I_{min}$ minimaler Schneidstrom
$I_{max}$ maximaler Schneidstrom
T Periodendauer
$t_m$ Zeit $I_m$
$t_{Imin}$ Zeit $I_{min}$
$t_{Imax}$ Zeit $I_{max}$
$t_s$ Schneidzeit
$t_{Pilot}$ Zeit des Pilotlichtbogens
$t_{up}$ Stromanstiegszeit
$t_{down}$ Stromabsenkzeit
t1 Zeit 1 ($I_m$ zu $I_{max}$)
t2 Zeit 2 ($I_{max}$ zu $I_m$)
t3 Zeit 3 ($I_m$ zu $I_{min}$)
t4 Zeit 4 ($I_{min}$ zu $I_m$)
WV1 Kühlmittelvorlauf 1
WV2 Kühlmittelvorlauf 2
WR1 Kühlmittelrücklauf 1
WR2 Kühlmittelrücklauf 2

**Patentansprüche**

**1.** Verfahren zum Plasmaschneiden eines Werkstückes (5) mittels eines Plasmaschneidanlage, die eine Plasmastromquelle (1) und einen Plasmabrenner (4) umfasst, der eine Elektrode (4.1) und eine Düse (4.2) aufweist, die einen geringen Abstand von der Elektrode (4.1) an einem unteren Ende des Plasmabrenners (4) hat, um eine Plasmakammer (4.7) dazwischen zu bilden, **dadurch gekennzeichnet, dass** ein von der Plasmastromquelle (1) erzeugter und durch den Plasmabrenner (4) fließender Strom I erst mindestens 1 s nach Erreichen eines zum Plasmaschneiden vorgegebenen arithmetischen Mittelwertes gezielt bzw. gesteuert zum Pulsieren mit einer frei wählbaren Frequenz f im Bereich von 0,1 Hz bis 500 Hz um diesen Mittelwert schwankt.

**2.** Verfahren nach Anspruch 1, **dadurch gekennzeichnet, dass** die frei wählbare Frequenz f im Bereich von 30 Hz bis 500 Hz, vorzugsweise von 35 Hz bis 500 Hz, besonders bevorzugt von 55 Hz bis 400 Hz, liegt.

**3.** Verfahren nach Anspruch 2, **dadurch gekennzeichnet, dass** der pulsierende Schneidstrom $I_S$ mit wenigstens einem frei wählbaren Spitzenwert $I_{min}$ und/oder $I_{max}$ im Bereich von 5% bis 70%, vorzugsweise von 10% bis 50%, um seinen arithmetischen Mittelwert $I_m$ schwankt.

**4.** Verfahren nach Anspruch 2 oder 3, **dadurch gekennzeichnet, dass** die minimale Abweichung eines Spitzenwertes $I_{max}$ und/oder $I_{min}$ vom arithmetischen Mittelwert $I_m$ des Schneidstromes $I_S$ 5A, bevorzugter 10A und am bevorzugsten 20A beträgt.

**5.** Verfahren nach einem der Ansprüche 2 bis 4, **dadurch gekennzeichnet, dass** die maximale Abweichung eines Spitzenwertes $I_{max}$ und/oder $I_{min}$ vom arithmetischen Mittelwert $I_m$ des Schneidstroms $I_S$ 200A, vorzugsweise 100A, beträgt.

**6.** Verfahren nach einem der Ansprüche 2 bis 5, **dadurch gekennzeichnet, dass** der Betrag der maximalen Stromänderungsgeschwindigkeit dI/dt des Schneidstroms $I_S$ 400A/ms beträgt und/oder der Betrag der minimalen Stromänderungsgeschwindigkeit dI/dt des Schneidstroms $I_S$ 2A/ms beträgt.

7. Verfahren nach einem der Ansprüche 2 bis 5, **dadurch gekennzeichnet, dass** das Tastverhältnis D = $t_{Imax}$/T des Schneidstroms $I_S$ zwischen 0,1 und 0,9, vorzugsweise wischen 0,3 und 0,7, liegt.

8. Verfahren nach Anspruch 1, **dadurch gekennzeichnet**, die frei wählbaren Frequenz f im Bereich von 0,1 Hz bis 30 Hz, vorzugsweise von 0,1 Hz bis 29 Hz, besonders bevorzugt von 0,1 Hz bis 20 Hz, liegt.

9. Verfahren nach Anspruch 8, **dadurch gekennzeichnet, dass** jeder Schneidstrompuls des pulsierenden Schneidstroms $I_s$ eine Niedrigpegeldauer $t_{Imin}$ und eine Hochpegeldauer $t_{Imax}$ aufweist, wobei gilt:

$$t_{Imin} + t_{Imax} = T,$$

mit

Periodendauer T = 1/f
und $t_{Imin}$ oder $t_{Imax}$ < 25% der Periodendauer T,
vorzugsweise $t_{Imin}$ oder $t_{Imax}$ < 15% der Periodendauer T.

10. Verfahren nach Anspruch 8, **dadurch gekennzeichnet, dass** jeder Schneidstrompuls des pulsierenden Schneidstroms $I_S$ eine Niedrigpegeldauer $t_{Imin}$ und eine Hochpegeldauer $t_{Imax}$ aufweist, wobei gilt

$$t_{Imin} + t_{Imax} < T,$$

Periodendauer T = 1/f
und
$t_{Imin} + t_{Imax}$ <50% der Periodendauer T,
vorzugsweise $t_{Imin} + t_{Imax}$ < 30% der Periodendauer T.

11. Verfahren nach einem der vorangehenden Ansprüche, **dadurch gekennzeichnet, dass** der arithmetische Mittelwert der Schneidspannung einen Wert im Bereich von 90 V bis 250 V, vorzugsweise im Bereich von 120 V bis 220 V, aufweist.

12. Verfahren nach einem der vorangehenden Ansprüche, **dadurch gekennzeichnet, dass** der Volumenstrom des Plasmagases (PG) konstant gehalten wird.

13. Verfahren nach einem der vorangehenden Ansprüche, **dadurch gekennzeichnet, dass** die Elektrode (4.1) eine Flachelektrode ist.

14. Verfahren nach einem vorangehenden Ansprüche, **dadurch gekennzeichnet, dass** das Plasmagas (PG) zur Rotation in der Plasmakammer (4.7) gebracht wird.

15. Verfahren nach einem der vorangehenden Ansprüche, **dadurch gekennzeichnet, dass** ein sauerstoffhaltiges Plasmagas (PG) verwendet wird.

16. Verfahren nach einem der vorangehenden Ansprüche, **dadurch gekennzeichnet, dass** der arithmetische Mittelwert des Schneidstroms $I_s$ einen Wert im Bereich von 25 A bis 500 A aufweist.

**Claims**

1. Method for plasma-cutting a workpiece (5) by means of a plasma-cutting system, which comprises a plasma current source (1) and a plasma torch (4), which has an electrode (4.1) and a nozzle (4.2), which has a small distance from the electrode (4.1) at a lower end of the plasma torch (4) in order to form a plasma chamber (4.7) therebetween, **characterised in that**

a current I produced by the plasma current source (1) and flowing through the plasma torch (4) only fluctuates about this mean at least 1 s after reaching an arithmetic mean, specified for plasma-cutting, in a targeted or controlled manner at an arbitrary frequency f in the range of 0.1 Hz to 500 Hz.

2. Method according to claim 1, **characterised in that** the arbitrary frequency f lies in the range of 30 Hz to 500 Hz, preferably 35 Hz to 500 Hz, especially preferably 55 Hz to 400 Hz.

3. Method according to claim 2, **characterised in that** the pulsating cutting current $I_s$ with at least one arbitrary peak value $I_{min}$ and/or $I_{max}$ in the range of 5% to 70%, preferably 10% to 50%, fluctuates about its arithmetic mean $I_m$.

4. Method according to claim 2 or 3, **characterised in that** the minimum deviation of a peak value $I_{max}$ and/or $I_{min}$ from the arithmetic mean $I_m$ of the cutting current $I_s$ is 5 A, more preferable 10 A and especially preferable 20 A.

5. Method according to one of the claims 2 to 4, **characterised in that** the maximum deviation of a peak value $I_{max}$ and/or $I_{min}$ from the arithmetic mean $I_m$ of the cutting current $I_s$ is 200 A, preferable 100 A.

6. Method according to one of the claims 2 to 5, **characterised in that** the amount of the maximum rate of change in current dI/dt of the cutting current $I_s$ is 400 A/ms and/or the amount of the minimum rate of change in current dI/dt of the cutting current $I_s$ is 2 A/ms.

7. Method according to one of the claims 2 to 5, **characterised in that** the duty cycle $D = t_{Imax}/T$ of the cutting current $I_s$ lies between 0.1 and 0.9, preferably between 0.3 and 0.7.

8. Method according to claim 1, **characterised in that** the arbitrary frequency f lies in the range of 0.1 Hz to 30 Hz, preferably 0.1 Hz to 29 Hz, especially preferably 0.1 Hz to 20 Hz.

9. Method according to claim 8, **characterised in that** each cutting current pulse of the pulsating cutting current $I_s$ has a low threshold duration $t_{Imin}$ and a high threshold duration $t_{Imax}$, where:

$$t_{Imin} + t_{Imax} = T,$$

with

period duration T = 1/f
and $t_{Imin}$ or $t_{Imax}$ < 25% of the period duration T,
preferably $t_{Imin}$ or $t_{Imax}$ < 15% of the period duration T.

10. Method according to claim 8, **characterised in that** each cutting current pulse of the pulsating cutting current $I_s$ has a low threshold duration $t_{min}$ and a high threshold duration $t_{Imax}$, where

$$t_{Imin} + t_{Imax} < T,$$

period duration T = 1/f
and
$t_{Imin} + t_{Imax}$ < 50% of the period duration T,
preferably $t_{Imin} + t_{Imax}$ < 30% of the period duration T.

11. Method according to one of the preceding claims, **characterised in that** the arithmetic mean of the cutting voltage has a value in the range of 90 V to 250 V, preferably in the range of 120 V to 220 V.

12. Method according to one of the preceding claim, **characterised in that** the volumetric flow of the plasma gas (PG) is held constant.

13. Method according to one of the preceding claims, **characterised in that** the electrode (4.1) is a flat electrode.

**14.** Method according to one of the preceding claims, **characterised in that** the plasma gas (PG) is placed in rotation in the plasma chamber (4.7).

**15.** Method according to one of the preceding claims, **characterised in that** an oxygenic plasma gas (PG) is used.

**16.** Method according to one of the preceding claims, **characterised in that** the arithmetic mean of the cutting current $I_s$ has a value in the range of 25 A to 500 A.

**Revendications**

**1.** Procédé de découpage au plasma d'une pièce (5) au moyen d'une installation de découpage au plasma, qui comprend une source de courant plasma (1) et une torche à plasma (4), qui présente une électrode (4.1) et une tuyère (4.2), qui est à une faible distance de l'électrode (4.1) à une extrémité inférieure de la torche à plasma (4) afin de former une chambre à plasma (4.7) entre les deux,
**caractérisé en ce**
**qu'**un courant généré par la source de courant plasma (1) et traversant la torche à plasma (4), seulement 1 s au moins après avoir atteint une valeur moyenne arithmétique prédéfinie de manière ciblée, respectivement commandée, pour le découpage au plasma, varie autour de cette valeur moyenne à des pulsations avec une fréquence f pouvant être librement choisie dans un intervalle de 0,1 Hz à 500 Hz.

**2.** Procédé selon la revendication 1 **caractérisé en ce que** la fréquence f pouvant être librement choisie se situe dans l'intervalle de 30 Hz à 500 Hz, de préférence, de 35 Hz à 500 Hz, de manière particulièrement préférée, de 55 Hz à 400 Hz.

**3.** Procédé selon la revendication 2 **caractérisé en ce que** le courant de découpe à pulsations $I_s$ varie avec au moins une valeur maximale pouvant être librement choisie $L_{min}$ et/ou $L_{max}$ dans un intervalle entre 5 % et 70 %, de préférence, entre 10 % et 50 %, autour de sa moyenne arithmétique $I_m$.

**4.** Procédé selon les revendications 2 ou 3 **caractérisé en ce que** la déviation minimale d'une valeur maximale $I_{max}$ et/ou $I_{min}$ de la valeur moyenne arithmétique $I_m$ du courant de découpe s'élève à 5 A, de préférence à 10 A, et de manière encore préférée, à 20 A.

**5.** Procédé selon l'une des revendications de 2 à 4 **caractérisé en ce que** la déviation maximale d'une valeur maximale $I_{max}$ et/ou $I_{min}$ de la valeur moyenne arithmétique $I_m$ du courant de découpe $I_s$ atteint 200 A, de préférence 100 A.

**6.** Procédé selon l'une des revendications de 2 à 5 **caractérisé en ce que** la contribution de la vitesse maximale de variation de courant dI/dt du courant de découpe $I_s$ s'élève à 400 A/ms et/ou la contribution de la vitesse minimale de variation de courant dI/dt du courant de découpe $I_s$ s'élève à 2 A/ms.

**7.** Procédé selon l'une des revendications de 2 à 5 **caractérisé en ce que** le rapport cyclique $D = t_{Imax}/T$ du courant de découpe $I_s$ se situe entre 0,1 et 0,9, de préférence entre 0,3 et 0,7.

**8.** Procédé selon la revendication 1 **caractérisé en ce que** la fréquence f pouvant être choisie librement se situe dans l'intervalle 0,1 Hz à 30 Hz, de préférence de 0,1 Hz à 29 Hz, de manière particulièrement préférée de 0,1 Hz à 20 Hz.

**9.** Procédé selon la revendication 8 **caractérisé en ce que** chaque impulsion du courant de découpe du courant de découpe $I_s$ à pulsations présente une durée de niveau faible $t_{Imin}$ et une durée de niveau fort $t_{Imax}$, où l'on a :

$$t_{Imin} + t_{Imax} = T,$$

avec

une durée de période T = 1/f
et $t_{Imin}$ ou $t_{Imax}$ < 25 % de la durée de période T,
de préférence, $t_{Imin}$ ou $t_{Imax}$ < 15 % de la durée de période T.

**10.** Procédé selon la revendication 8 **caractérisé en ce que** chaque pulsation de courant de découpe du courant de découpe I$_s$ à pulsations présente une durée de niveau faible t$_{Imin}$ et une durée de niveau fort t$_{Imax}$, où on a

$$t_{Imin} + t_{Imax} < T,$$

durée de période T = 1/f
et
t$_{Imin}$ + t$_{Imax}$ < 50 % de la durée de période T,
de préférence, t$_{Imin}$ + t$_{Imax}$ < 30 % de la durée de période T.

**11.** Procédé selon l'une des revendications précédentes **caractérisé en ce que** la valeur moyenne arithmétique de la tension de découpe est une valeur dans l'intervalle de 90 V à 250 V, de préférence, dans l'intervalle de 120 V à 220 V.

**12.** Procédé selon l'une des revendications précédentes **caractérisé en ce que** le flux volumique du gaz plasmogène (PG) est gardé constant.

**13.** Procédé selon l'une des revendications précédentes **caractérisé en ce que** l'électrode (4.1) est une électrode en feuille.

**14.** Procédé selon l'une des revendications précédentes **caractérisé en ce que** le gaz plasmagène (PG) est mis en rotation dans la chambre de plasma (4.7).

**15.** Procédé selon l'une des revendications précédentes **caractérisé en ce que** qu'un gaz plasmagène (PG) contenant de l'oxygène est employé.

**16.** Procédé selon l'une des revendications précédentes **caractérisé en ce que** la valeur moyenne arithmétique du courant de découpe I$_s$ possède une valeur dans l'intervalle de 25 A à 500 A.

Figur 1

EP 2 483 031 B1

Figur 2

Figur 3

EP 2 483 031 B1

Figur 4

$t_{Imax} = 6ms$

$t_{Imin} = 6ms$

$D = t_{Imax} / T = 0,5$

$dI/dt_1 = |(I_{max} - I_m)| / t_1 = 40A/ms$

$t_1 = t_2 = t_3 = t_4 = 0,5ms$

$T = 12ms$

$f = 83 Hz$

$I_{max} = 180A$

$I_m = 160A$

$I_{min} = 140A$

$I_S$ in A

t in ms

$I_S$ in A

$I_{max} = 180A$
$I_m = 160A$
$I_{min} = 140A$

$t$ in ms

$t_{Imax}$  $t_{Imin}$  $T = 12ms$  $f = 83\,Hz$

$t_1 = t_2 = t_3 = t_4 = 3ms$

$t_{Imax} = 6ms$
$t_{Imin} = 6ms$
$D = t_{Imax} / T = 0{,}5$
$dI/dt_1 = |(I_{max} - I_m)| / t_1 = 6{,}6A/ms$

Figur 5

Figur 6

$I_{max} = 400A$

$I_m = 300A$

$I_{min} = 200A$

$t_{Imax}$     $t_{Imin}$

$T = 4ms$

$f = 250 Hz$

$I_S$ in A

$t$ in ms

$t_{Imax} = 2ms$            $t_1 = t_3 = 1,7ms$

$t_{Imin} = 2ms$            $t_2 = t_4 = 0,3ms$

$D \quad = t_{Imax} / T = 0,5$

$dI/dt_1 = dI/dt_3 = 59A/ms$

$dI/dt_2 = dI/dt_4 = 333A/ms$

Figur 7

EP 2 483 031 B1

$I_S$ in A

$I_{max}$ = 260A

$I_m$ = 160A

$I_{min}$ = 110A

$t_1$

$t_2$

$t_3$

$t_4$

$t_{Imax}$

$t_{Imin}$

T = 6ms
f = 166 Hz

3   6   9   12

$t$ in ms

$t_1 = t_3 = 0{,}5ms$

$t_2 = t_4 = 0{,}25ms$

$t_{Imax} = 2ms$

$t_{Imin} = 4ms$

$D = t_{Imax} / T = 0{,}33$

$dI/dt_1 = dI/dt_2 = 100A / 0{,}5ms = 200A/ms$

$dI/dt_3 = dI/dt_4 = 50A / 0{,}25ms = 200A/ms$

Figur 8

22

Figur 9

Figur 10

EP 2 483 031 B1

Figur 11

Figur 12

Figur 13

Figur 14

Figur 15

Figur 16

$I_S$
in A

$I_{max}$ = 450A

$I_m$ = 350A

$I_{min}$ = 250A

$t_{Imax}$

$t_{Imin}$

$t$
in ms

T= 650ms

$t_{Imax}$ = 50ms

$t_{Imin}$ = 50ms

Fall:    $t_{Imin}$ + $t_{Imax}$ < T

Figur 17

$I_s$
in A

$I_{max}$ = 300A
$I_m$ = 290A
$I_{min}$ = 200A

$t_{Imin}$

$t_{Imax}$

T= 400ms

$t_{Imax}$ = 300ms

$t_{Imin}$ = 100ms

Fall:  $t_{Imin}$ + $t_{Imax}$ = T

Figur 18

EP 2 483 031 B1

# Figur 19

# Figur 19a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 6274841 B